# EUROPÄISCHE PATENTSCHRIFT

(11) **EP 3 170 775 B1**
(45) Veröffentlichungstag und Bekanntmachung des Hinweises auf die Patenterteilung: **13.03.2019**
(21) Anmeldenummer: 16199706.9
(22) Anmeldetag: 18.11.2016
(51) Int. Cl.: B65G 47/51

(54) **ZWISCHENSPEICHER FÜR STÜCKGUT**
INTERMEDIATE STORAGE FOR PIECE GOODS
ACCUMULATEUR INTERMEDIAIRE POUR PRODUITS DE DETAILS

(30) Priorität: 20.11.2015 CH 16952015
(43) Veröffentlichungstag der Anmeldung: 24.05.2017
(73) Patentinhaber: Mecha AG, 3123 Belp (CH)
(72) Erfinder: ROHR, Lukas, 3125 Toffen (CH); RYTZ, Thomas, 3664 Burgistein (CH)
(74) Vertreter: Hornig, Leonore

(56) Entgegenhaltungen:
- EP-A1- 0 005 169
- DE-A1- 2 407 319
- DE-A1- 3 733 694

## Beschreibung

Die Erfindung betrifft einen Zwischenspeicher für Stückgut mit einem Speicherturm mit mehreren senkrecht übereinander, zueinander beabstandet angeordneten kreisförmigen oder polygonförmigen waagrechten Speicherscheiben, die an einem mittigen Rohr angeordnet sind.

Als Stückgut kommen insbesondere an einer Bearbeitungsstelle anfallende Kleinteile in Betracht, die sich nicht als Schüttgut behandeln lassen, wie Stanz-, Guss- oder Drehteile, die nach dem Herstellungsprozess für einen weiteren Arbeitsprozess in einem Zwischenspeicher gelagert werden sollen.

Aus der DE 32 47 899 A1 ist ein derartiger Zwischenspeicher für Stückgut bekannt. Der Zwischenspeicher ist der auf einer vertikal verstellbaren Tragvorrichtung angeordnet ist, so dass der Zwischenspeicher hinsichtlich seiner Höhe durch Verstellen der Höhe der Tragevorrichtung eingestellt werden kann. Auch kann die Tragsäule des Zwischenspeichers auf der Tragvorrichtung gedreht werden, wodurch auch die Speicherscheiben mitgedreht werden. Eine derartige Anordnung ist konstruktiv aufwendig und darüber hinaus erfordert das Beschicken und Entnehmen des Stückguts aufwendige Vorrichtungen, die an die jeweiligen Speicherebenen gefahren werden müssen.

Aus der DE 37 33 694 A1 ist ebenfalls ein gattungsgemäßer Zwischenspeicher nach dem Oberbegriff des Anspruchs 1 bekannt. Bei dem hier offenbarten Drehturmspeicher sind die Speicherscheiben fest an einer Tragsäule angebracht und gemeinsam mit dieser drehbar. Zur Höhenverstellung ist eine Hubeinrichtung vorgesehen, mit der der Drehturmspeicher, also das mittige Rohr zusammen mit den an diesem befestigten Speicherscheiben angehoben werden kann. Das höhenverstellbare Rohr ist auf einer festsehenden zylindrischen Führung gelagert, die sich innerhalb des Rohres befindet. Der Drehturmspeicher ist von einer prismatischen Verkleidung umgeben. Zur Führung weiteren Führung des Speicherturms bei einer Hub- oder Rotationsbewegung sind Führungselemente an der prismatischen Verkleidung angebracht. Diese sind die in Form von sich um seitlich angebrachte senkrechte Achsen drehende Rollen, Walzen oder Gleitführungen ausgebildet, an denen die Speicherplatten oder Lagerebenen mit ihrem Umfang anliegen und somit geführt sind. Diese Anordnung ist konstruktiv aufwendig und hat den Nachteil einer schlechteren Zugänglichkeit zum Speicherturm für das Entladen.

Im Hinblick auf diesen Stand der Technik liegt der Erfindung die Aufgabe zugrunde eine Zwischenspeicher zu schaffen, der konstruktiv weniger aufwendig und kompakter ist und der leichter für das Beladen und Entladen von Stückgut zugänglich ist.

Diese Aufgabe wird durch einen gattungsgemäßen Zwischenspeicher gelöst, bei dem
- in einem Nutenbereich längs des Rohres eine Nut ausgebildet ist, derart, dass die Wand des Rohres auf zwei Rohrseiten in dem Nutenbereich vertikale Schlitze aufweist,
- ein zu der Form der Nut korrespondierender Lagerzapfen derart waagrecht in das Rohr eingebracht ist, dass jeweils ein Ende des Lagerzapfens waagrecht durch einen der Schlitze aus dem Rohr herausragt,
- in dem Rohr eine Hubeinheit angeordnet ist, die mit dem Lagerzapfen derart verbunden ist, dass der Lagerzapfen innerhalb des Nutenbereichs des Rohres durch Antrieb der Hubeinheit über eine Hubantriebseinrichtung vertikal bewegbar ist, und dass die Enden des Lagerzapfens derart mit den Speicherscheiben verbunden sind, dass die Speicherscheiben mit dem Lagerzapfen vertikal auf und ab bewegbar sind.

Mit dieser erfindungsgemäßen Anordnung des Zwischenspeichers wird erreicht, dass bei der Hubbewegung die Speicherscheiben zusammen mit dem Lagerzapfen auf und ab bewegt werden, ohne dass die gesamte Vorrichtung auf und ab bewegt werden muss. Das mittige Rohr bleibt fest stehen, so dass die Anordnung statisch stabiler ist. Es sind keine konstruktiv aufwendigen Maßnahmen nötig, um die gesamte Anordnung zu bewegen und zu stabilisieren. Auch bleibt die Gesamthöhe des Zwischenspeichers während der Hubbewegung der Speicherplatten konstant, da sich nur die Speicherplatten entlang des Nutenbereichs, in dem die Schlitze ausgebildet sind, auf und ab bewegen. Die Speicherscheiben können so auf einfache Weise jeweils in eine vorgegeben Höhe gefahren werden, in welcher eine Beladen oder Entladen der Speicherplatten möglich ist. Der gesamte Entlade- und Beladevorgang kann somit immer auf gleicher Höhe erfolgen, ohne dass äußere Parameter angepasst werden müssen. Beispielsweise muss eine äußere Vorrichtung, die zum Beladen oder Entladen verwendet wird, nicht auf eine andere Höhe gebracht werden. Auch müssen räumliche Maße während des Ladevorgangs nicht berücksichtigt werden, da sich die Höhe des Zwischenspeichers bei der Hubbewegung der Speicherscheibe nicht ändert.

Die Schlitze erstrecken sich in Längsrichtung entlang des gesamten Nutenbereichs, so dass der Lagerzapfen in dem Nutenbereich auf und ab bewegt werden kann. Wesentlich ist, dass die Speicherscheiben aneinander befestigt sind und derart fest mit dem Lagerzapfen verbunden sind, dass sie mit dem Lagerzapfen auf und ab bewegbar sind. Bevorzugt sind die Speicherscheiben miteinander verschraubt, so dass sie auch bei Bedarf, wie Wartung oder Reparatur, wieder voneinander getrennt werden können. Der Zwischenspeicher weist bevorzugt eine Boden auf, auf dem das mittige Rohr gelagert ist.

Es ist vorteilhaft, wenn eine Zapfen-Hublagerung vorgesehen ist, die den Lagerzapfen in den Schlitzen der Nut ringartig umgibt. Eine derartige Lagerung des Lagerzapfens in der Nut bewirkt, dass ein Reiben an den Innenwänden der Nut in dem Rohr verhindert wird. Auch wird der Lagerzapfen hierdurch so geführt, dass er bei der Hubbewegung gegen ein Verdrehen in der Nut und in dem Rohr gesichert ist. Die Zapfen-Hublagerung kann mehrere ringförmige Lagerelemente umfassen, die jeweils den Bereich des Lagerzapfens umgeben, der innerhalb einer der Schlitze des Rohres liegt.

Auch ist es vorteilhaft, wenn eine Hublagerung vorgesehen ist, die auf der Außenwand des Rohres zur vertikalen Führung der Speicherscheiben angeordnet ist. Mittels einer derartigen Hublagerung wird die Last der gesamten Anordnung, die die Hubbewegung ausführt getragen und bei der Hubbewegung geführt, also insbesondere die Last der Speicherscheiben, des Zapfens und anderer daran befestigter Elemente.

Gemäß einem vorteilhaften Ausführungsbeispiel der Erfindung weist die Hubeinheit eine Spindel auf, die auf dem Boden des Zwischenspeichers gelagert ist, sowie eine auf der Spindel mittels korrespondierender Gewinde angeordnete Mutter, wobei die Mutter fest mit dem Lagerzapfen verbunden ist. Ferner umfasst die Hubantriebseinrichtung einen Hub-Motor und ein Hub-Getriebe, die außerhalb des Rohres angeordnet und mit der Spindel derart verbunden sind, dass die Spindel in Rotation versetzbar ist. Auf diese Weise kann der Hubantrieb einfach und zuverlässig realisiert werden. Es sind aber auch Alternativen im Rahmen der Erfindung möglich, wie ein hydraulischer oder pneumatischer Hub-Antrieb mittels eines Zylinderkolbenaggregats. Der Hub-Motor kann oberhalb der Speicherplatten angeordnet werden. Hierdurch wird die Anordnung des Speicherturms weiter kompakt.

Gemäß einer vorteilhaften Weiterbildung der Erfindung wird auf den aus dem Rohr herausragenden Enden des Lagerzapfens eine Rotationseinheit angeordnet, über welche die Speicherscheiben horizontal drehbar mit dem Lagerzapfen verbunden sind, wobei die Rotationseinheit ein Rotationsgetriebe umfasst, über welches sie zum Rotationsantrieb mit einem Rotations-Motor verbunden ist. Auf diese Weise kann auch die Rotationsbewegung in Kombination mit der Hubbewegung auf einfache Weise, ohne eine aufwendige Konstruktion und bei einer kompakten Vorrichtung erfolgen. Der Lagerzapfen kann gleichzeitig als Basis für die Hub- und für die Rotationsbewegung der Speicherplatten verwendet werden. Das mittige Rohr kann auch bei der Rotationsbewegung der Speicherscheiben fest stehen bleiben, da sich nur die Speicherscheiben selbst drehen. Damit bleibt die Anordnung stabil und kann kompakt, ohne aufwendige äußere Lagerungen gebaut werden.

Vorteilhafterweise weist die Rotationseinheit eine Rotationstrageplatte auf, welche fest mit den Speicherscheiben verbunden ist, sowie eine Hubtrageplatte, welche fest mit dem Lagerzapfen und drehbar mit der Rotationstrageplatte und den Speicherscheiben verbunden ist. Über die Rotationstrageplatte können so die Speicherscheiben zuverlässig und stabil gegenüber dem Lagerzapfen und gegenüber dem mittigen Rohr gedreht werden. Über die Hubtrageplatte können die Speicherplatten bei einer Hubbewegung des Lagerzapfens zuverlässig und stabil mitgeführt werden. Hub-und Rotationsbewegung sind hierdurch entkoppelt. Das Drehen der Rotationstrageplatte gegenüber der Hubtrageplatte sowie der Antrieb der Rotationstrageplatte können durch eine geeignete Auswahl von Zahnrädern, Wellen, Kugellagern, die geeignet nach den speziellen Anforderungen zwischen den Platten realisiert werden. Die genaue Anordnung liegt im Ermessen des Fachmanns.

Ferner ist es vorteilhaft, wenn der Rotationsmotor über eine Motortrageplatte fest mit der Hubtrageplatte verbunden ist, wobei das motorseitige Antriebselement mit dem Rotationsgetriebe zum Antrieb der Rotationsplatte geeignet verbunden ist. Auf diese Weise wird eine kompakte und stabile Anordnung der Vorrichtung gewährleistet. Der Rotationsmotor kann mit den Speicherplatten auf und ab bewegt werden, wird aber bezüglich der Rotationsbewegung stabil gehalten. Der Rotationsmotor, die Hubtrageplatte und der Zapfen können sowohl unterhalb als auch oberhalb der Rotationseinheit und den Speicherplatten angeordnet werden oder auch umgekehrt. Dies liegt im Ermessen des Fachmanns. Wenn der Rotationsmotor, die Hubtrageplatte und der Zapfen und ggf. andere für die Hubbewegung angeordnete Elemente oberhalb der Rotationseinheit und der Speicherplatten angeordnet werden, kann eine noch kompaktere Vorrichtung erzielt werden, da so die Beladungshöhe zum Beladen der Speicherplatten deutlich tiefer gewählt werden kann.

Günstigerweise ist auf der Außenwand des Rohres in dem Nutenbereich eine Rotationslagerung zur Lagerung einer Rotationsbewegung der Speicherscheiben um das Rohr angeordnet ist. So kann die Rotationsbewegung zuverlässig geführt werden, ohne dass platzaufwändige Maßnahmen erforderlich werden. Die Rotationslagerung kann zwei ringförmige Rotations-Lagerelemente umfassen, von denen eines in einem Bereich am oberen Ende des Nutenbereichs und eines in einem Bereich am unteren Ende des Nutenbereichs des Rohres auf der Außenwand des Rohres angeordnet ist. Die Rotationslagerung und die Hublagerung können als eine gemeinsame Lagerung ausgebildet sein, so dass auf dem Rohr nur eine Lagerung für beide Bewegungen angeordnet werden muss. Dies Lagerung kann in mehrere Elemente aufgeteilt sein, die das Rohr ringartig in vorgegebenen Abständen umgeben. Durch diese einfache Lagerung können die Speicherplatten sowohl während der Rotationsbewegung als auch währende der Hubbewegung zuverlässig geführt und gelagert werden. Die Lagerung erfolgt vollständig im Bereich des mittigen Rohres, so dass hierfür kein Platzaufwand erforderlich ist. Der Speicherturm ist von allen Seiten gut zugänglich.

Auch ist es platzsparend, wenn der Rotations-Motor und der Hub-Motor oberhalb des die Speicherscheiben umfassenden Speicherturms und innerhalb eines durch den Durchmesser der Speicherscheiben gegebenen Bereiches angeordnet sind. Der Antrieb des Hubmotors kann hier ebenfalls am oberen Ende der Säule angebracht werden. Diese Anordnung führt zu einer geringen Bauhöhe, da somit tiefe Positionen zum Beladen der Speicherplatten ohne Behinderung durch Teile der Vorrichtung angefahren werden können.

Gemäß einer günstigen Weiterbildung der Erfindung umfassen die Speicherscheiben jeweils eine Zentralscheibe, die an dem Rohr drehbar und vertikal verschiebbar angeordnet ist, und Wechselscheiben, die als kreisringartige Segmente ausgebildet und jeweils an der Zentralscheibe befestigbar sind. Somit können die Wechselscheiben und damit das Stückgut zum Entladen des Speicherturms und der Speicherplatten leicht entnommen werden.

Es ist vorteilhaft, wenn der Zwischenspeicher von einer Umkleidung, vorzugsweise einer prismatischen Umkleidung, umgeben ist, die in einem oberen Bereich eine Beschickungsöffnung aufweist. Die Beschickungsöffnung ist dabei so angeordnet, dass durch vertikales Verschieben des Speicherturms in seiner Höhe mittels der Hubeinheit, jede Lagerebene an den unteren Rand der Beschickungsöffnung fahrbar ist, dass die Höhe der Beschickungsöffnung vorzugsweise etwa dem Abstand zweier benachbarter Speicherscheiben voneinander entspricht, und dass an der Beschickungsöffnung ein Förderband zum Befördern des Stückguts auf eine der Speicherscheiben bzw. auf eine der Wechselscheiben angeschlossen ist. Die Beschickungsöffnung ist hinsichtlich ihrer Höhe und Größe so gewählt, dass das Stückgut ohne Behinderung auf die Scheibe transportiert werden kann. Vorteilhafterweise ist in der Umkleidung eine Tür vorgesehen, deren Größe und Anordnung so gewählt ist, dass durch sie eine Wechselscheibe entnehmbar und einführbar ist.

Günstigerweise ist an der Beschickungsöffnung eine Verstelleinheit vorgesehen, mit der das Förderband höhenverstellbar ist. Entlang des äußeren Randes der Speicherscheiben bzw. der Wechselscheiben können erfindungsgemäß Behälter zur Aufnahme des Stückguts angeordnet sein, und das Förderband kann eine Beladeeinheit zum Beladen der Behälter mit dem Stückgut aufweisen. So kann das Stückgut auf einfache Weise den einzelnen Behältern zugeführt und darin deponiert werden. Wenn die Beladeeinheit als eine über den äußeren Rand einer der Wechselscheiben überstehende Messerkante ausgebildet ist, wird ein mögliches Herunterfallen des Stückguts in einen Zwischenraum zwischen dem Förderband und dem Behälter bzw. der Speicherplatte zuverlässig verhindert. Es kann zwischen den Behältern ein Leerplatz, beispielsweise durch Weglassen eines Behälters und/oder eine geeignete Aussparung am Rande der Speicherscheibe bzw. der Wechselscheibe bzw. der Wechselplatte, vorgesehen sein, so dass die Messerkante an dieser Stelle bei einer Hubbewegung in die neue Position gebracht werden kann. In diesem Fall kann die Messerkante als feste Kante ausgebildet sein. Die Messerkante kann auch als hochlappbare oder herunterklappbare Kante ausgebildet sein. Dann kann die Messerkante bei einer Hubbewegung der Speicherplatten nach oben bzw. unten geklappt werden. Auch kann erfindungsgemäß die Beladeeinheit einen auf dem Förderband bewegbaren Einschieber sowie eine durch den Einschieber betätigbare Klappe aufweisen, mittels welcher ein Zwischenraum zwischen dem Förderband und einem der Behälter überbrückt werden kann.

Weitere Einzelheiten, Merkmale und Vorteile der vorliegenden Erfindung ergeben sich aus der nachfolgenden Beschreibung bevorzugter Ausführungsbeispiele unter Bezugnahme auf die Zeichnung.

Es zeigen:
- Fig. 1: Eine schematische Darstellung eines Ausführungsbeispiels eines erfindungsgemäßen Zwischenspeichers in einen senkrechten axialen Schnitt durch den Zwischenspeicher;
- Fig. 2: eine Aufsicht von oben auf den Zwischenspeicher aus Figur 1;
- Fig. 3: ein erfindungsgemäßes Ausführungsbeispiel von Wechselscheiben und Zentralscheiben des Zwischenspeichers aus Figur 1;
- Fig. 4: einen vergrößerten Ausschnitt aus der Darstellung der Figur 1 des Zwischenspeichers, mit einem Ausführungsbeispiel für eine erfindungsgemäße Rotationseinheit (Figur 4a) sowie eine Schnittdarstellung durch die Rotationseinheit;
- Fig. 5: ein Ausführungsbeispiel für eine Beladeeinheit des Zwischenspeichers aus Figur 1, die höhenverstellbar ist;
- Fig. 6: ein Ausführungsbeispiel einer Beladeeinheit mit Einschieber kurvengesteuert;
- Fig. 7: ein Ausführungsbeispiel für die Beladeeinheit mit beweglicher Messerkante; und
- Fig. 8: ein Ausführungsbeispiel der Beladeeinheit mit einem Leerplatz.

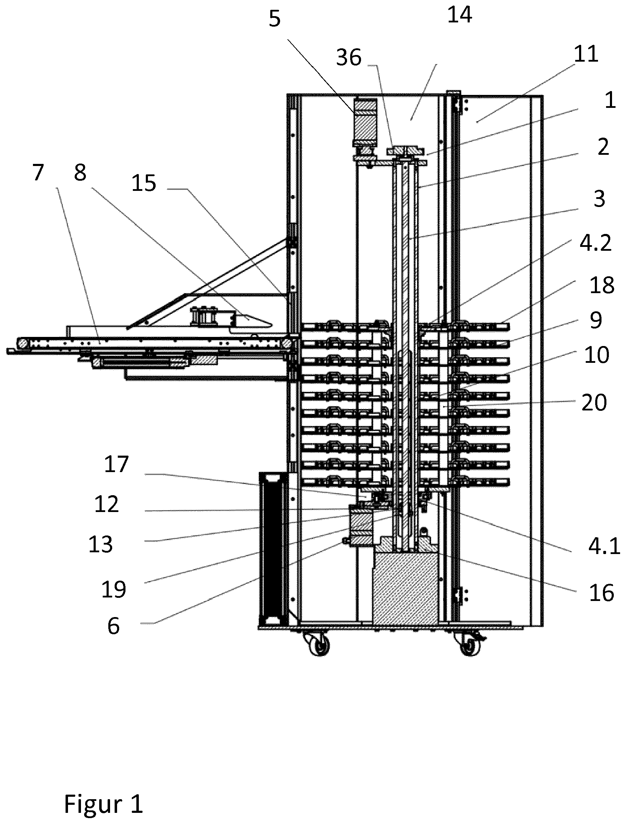

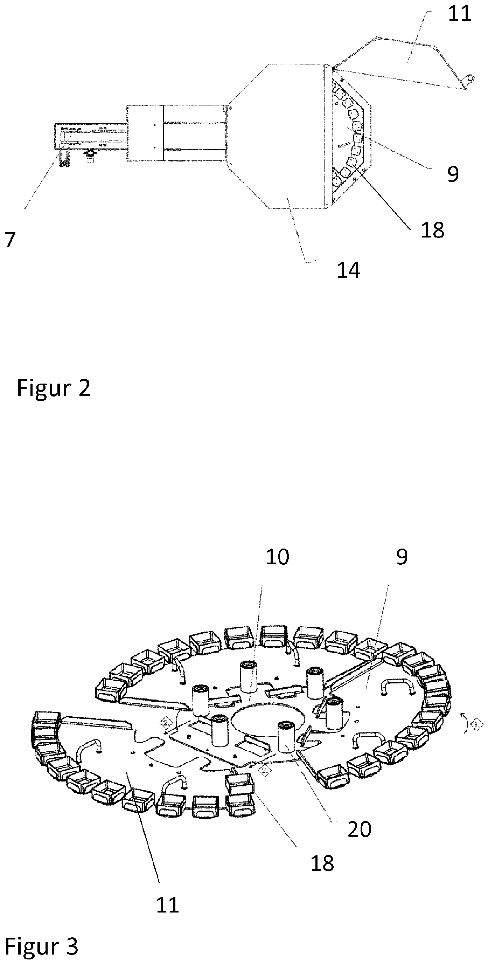

Der Zwischenspeicher ist gemäss Fig. 1 und Fig. 2 aufgebaut und weist eine senkrechte Säule 1 auf, die ein Rohr 2 umfasst. Auf dem Rohr 2 sind die Rotationslagerungen 4.1 und 4.2 angebracht, welche die Zentralscheiben 10 auf dem Rohr 2 für die Rotations- und Hubbewegung zentrieren und führen. An den Zentralscheiben 10 sind die Wechselscheiben 9 befestigt, welche zur Entladung über die Tür 11 entnommen werden können. Die Hubbewegung geschieht über den Lagerzapfen 12, welcher mit einer Mutter 19 auf der Hubeinheit 3 angebracht ist und über die Lagerung 13 zur vertikalen Führung des Lagerzapfens 12 in einer Nut im Rohr 2 geführt und gegen Verdrehung gesichert wird. Die Hubbewegung wird über den Hub-Motor 5 und ein Hub-Getriebe 36 angetrieben, welcher am oberen Ende des Rohres 2 angebracht ist, damit eine möglichst tiefe Position der Beschickungsöffnung 15 erreicht werden kann.

In der Verkleidung 14 befindet sich im oberen Bereich eine einzige Beschickungsöffnung 15, an der ein Förderband 7 angeschlossen ist. Damit die einzelnen Wechselscheiben 9, insbesondere Wechselbleche, diese Beschickungsöffnung 15 erreichen, sind die Wechselscheiben 9 über die Zentralscheiben 10 auf dem Rohr 2 geführt und mittels der Hubeinheit anhebbar.

Das Rohr 2 ist in einem Flansch 16 zentriert, welcher auf dem Boden des Speichers steht. Statt eines Spindelgetriebes 3 können die Zentralscheiben 10 auch über ein Zylinderkolbenaggregat oder eine anderweitige Hubvorrichtung angehoben werden.

Die Wechselscheiben 9 und die Zentralscheiben 10 sind gemäss Fig. 3 aufgebaut, wobei die Wechselscheiben 9 auf der Zentralscheibe 10 befestigt werden. Die Wechselscheiben 9 können zum Entladen in der gezeigten Pfeilrichtung 2 mit den Handgriffen entfernt werden. Anschliessend kann der Drehturmspeicher in der gezeigten Pfeilrichtung 1 zur nächsten Wechselscheibe 9 gedreht werden. Die Einteilung und die Grösse der Behälter 18 kann flexibel der Grösse des Stückgutes angepasst werden. Die Behälter 18 sind entlang des äußeren Randes der Wechselscheiben 9 geeignet zur Aufnahme des Stückguts angeordnet. Dazu kann ebenfalls der Abstand der Lagerebenen bzw. Speicherscheiben über die Distanzstücke 20 dem Stückgut angepasst werden.

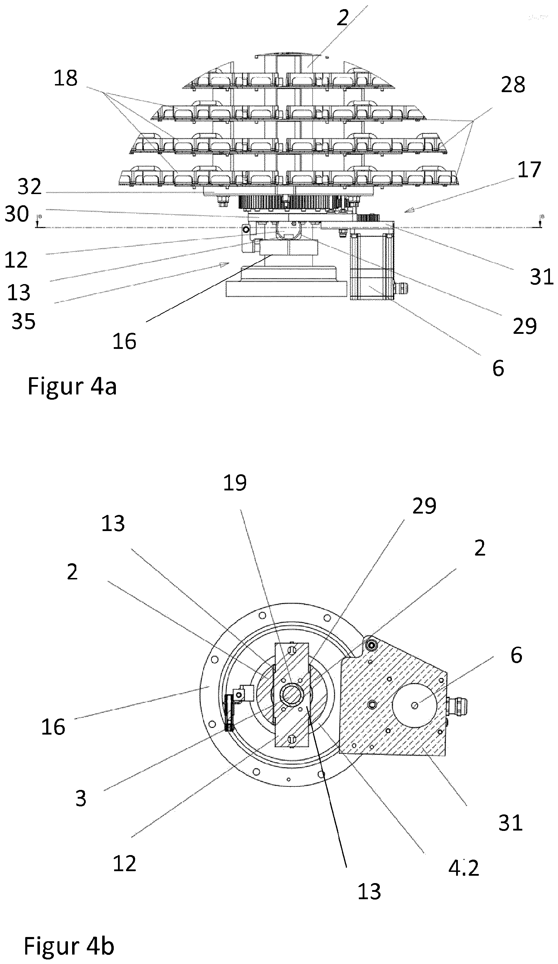

In Figur 4 ist ein vergrößerter Ausschnitt aus einem Ausführungsbeispiels eines Zwischenspeichers gezeigt, das im Wesentlichen dem der Figur 1 entspricht und in dem die Rotationseinheit 17 näher dargestellt ist. In der Nut 29 in dem Rohr 2 ist der Lagerzapfen 12 waagrecht in das Rohr 2 derart eingebracht, dass jeweils ein Ende des Lagerzapfens 12 durch einen der durch die Nut 29 gebildeten Schlitze in dem Rohr 2 aus dem Rohr 2 nach außen ragt. Der Lagerzapfen 12 ist in dem Bereich der Schlitze der Nut 29 von einer Zapfen-Hublagerung 13 umgeben, welche den Lagerzapfen bei eine Hubbewegung lagert und gegen ein Verdrehen in der Nut 29 sichert. Der Lagerzapfen ist mit der Mutter 19 fest verbunden, die auf der in dem Rohr 2 angeordneten Spindel 3 aufgeschraubt ist und mit dieser eine Hubeinheit bildet. Auf dem Lagerzapfen 12 ist eine Hubtragplatte 30 angeordnet und fest mit dem Lagerzapfen 12 und der Mutter 19 verbunden. An der Hubtragplatte 30 ist der Rotations-Motor 6 über eine Motortrageplatte 31 fest verbunden. Durch einen Antrieb der Spindel 3 mittels des in Figur 1 gezeigten Hub-Motors 5 wird die Hubeinrichtung 35, die den Lagerzapfen 12, die Mutter 19 und die Hubtrageplatte 30 umfasst auf und ab bewegt. Mit der Hubeinrichtung bewegen sich die miteinander verschraubten Speicherscheiben 28 mit den auf diesen angeordneten Behältern 18 entlang des Rohres 2 auf und ab. Ebenso bewegt sich der Rotations-Motor 6 mit dieser Anordnung auf und ab.

Auf der Hubtrageplatte 30 ist die Rotationseinheit 17 angeordnet, die eine Rotationstrageplatte 32 aufweist, welche fest mit den Speicherscheiben 28 verbunden ist sowie die Hubtrageplatte 32, die drehbar mit der Rotationstrageplatte 32 verbunden ist. Die drehbare Lagerung der Rotationstrageplatte 32 gegenüber der Hubtrageplatte 30 sowie der Antrieb der Rotationstrageplatte 32 mittels des Rotationsmotors 6 erfolgt über geeignet angeordnete Kugellager, Zahnräder und Wellen, die in Figur 4a schematisch dargestellt sind. Durch einen Antrieb mittels des Rotations-Motors 6 kann somit die Rotationstrageplatte 32 mittels des hier durch Zahnräder gezeigten Getriebes gegenüber der Hubeinrichtung 35 gedreht werden. Mit der Rotationstrageplatte 2 werden die Speicherplatten 28 gedreht, da diese fest mit der Rotationstrageplatte 32 verbunden sind. Die Lagerung und Führung der Rotationsbewegung sowie der Hubbewegung der Speicherplatten erfolgt mittels der in Figur 1 beschriebenen Rotationslagerungen 4.1, 4.2, die auf dem Rohr 2 angeordnet sind. Die Vorrichtung ist mit einem Flansch 16 versehen, der über einen Sockel auf der Bodenplatte des Zwischenspeichers befestigt wird, z.B. durch Schrauben.

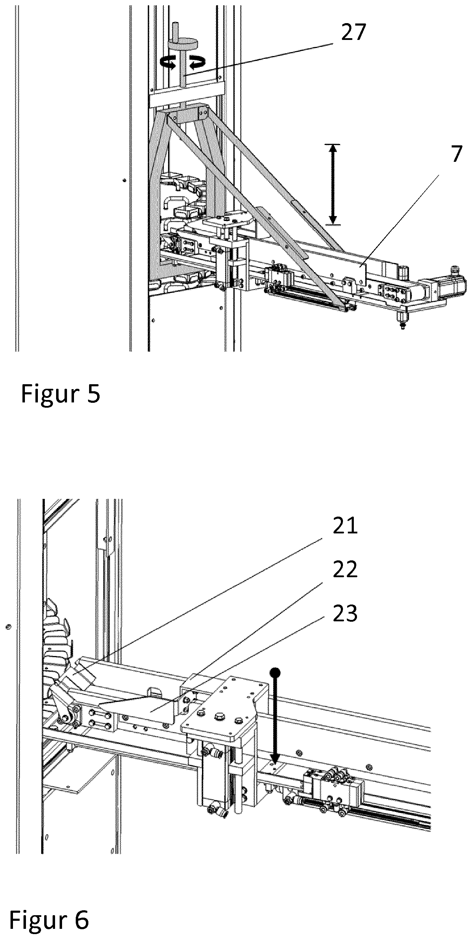

Die Beladeeinheit 8 und das Förderband 7 können entsprechend Fig. 5 höhenverstellbar gestaltet werden, sodass die Beladehöhe dem jeweiligen Niveau der vorhergehenden Maschine angepasst werden kann. Diese Verstelleinheit (27) kann manuell oder automatisch mit einem Antrieb gestaltet werden. Dadurch kann ein Drehturmspeicher an Maschinen mit verschiedenen Beladehöhen eingesetzt werden.

Die Beladeeinheit 8 ist gemäss Fig. 6 so gestaltet, dass das Stückgut über den Einschieber 22 in Richtung eines der Behälter 18 geschoben wird. Dabei wird der Einschieber 22 hinter dem Stückgut auf das Förderband 7 abgesenkt und anschliessend in horizontaler Richtung verschoben. Dabei wird über die Kurve 23 des Einschiebers 22 die gefederte Klappe 21 betätigt, damit der Zwischenraum zwischen Behälter 18 und Förderband 7 geschlossen werden kann.

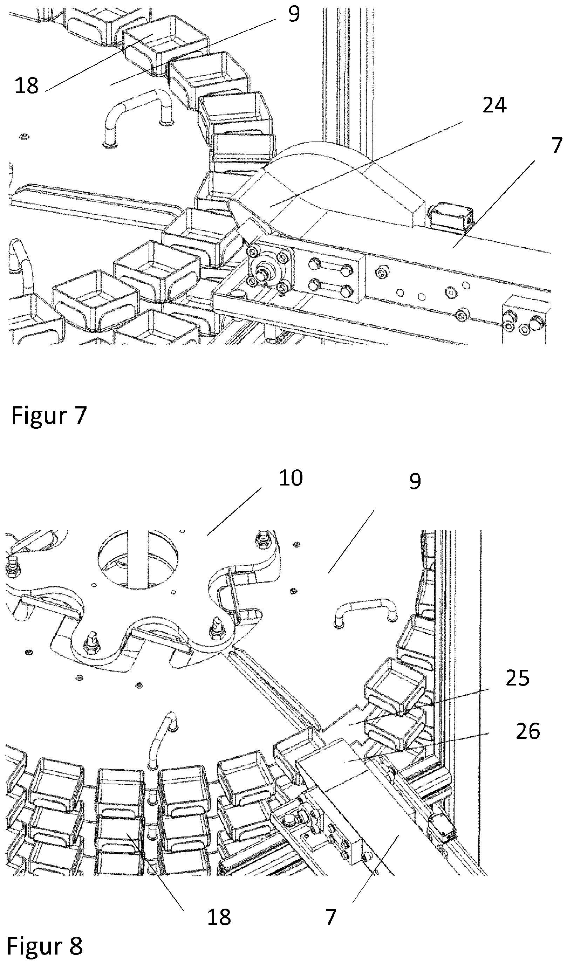

Fig. 7 zeigt eine Variante zu Fig. 6 bei welcher der Zwischenraum zwischen einem beispielhaft gezeigten der Behälter 18 und dem Förderband 7 über eine bewegliche Messerkante 24 geschlossen wird und nach dem Beladevorgang wieder hochklappt, damit das Rotieren und Anheben der Lagerebenen ermöglicht wird.

Fig.8 zeigt eine Variante zu Fig. 6 bei welcher der Zwischenraum zwischen einem der Behälter 18 und dem Förderband 7 über eine feste Messerkante 26 gelöst wird. Um die Hubbewegung der Lagerebenen, also der Speicherscheiben, zu ermöglichen, muss das Förderband 7 an den Leerplatz 25 positioniert werden. Dadurch wird die Hubbewegung zum nächsten Lagerplatz ermöglicht.

Es sei darauf hingewiesen, dass die Beschreibung der Ausführungsbeispiele keine Einschränkung der Erfindung darstellt. So können die Antriebe für Hub- und Rotationsbewegung anders ausgestaltet werden, die Anordnung der einzelnen Elemente des Zwischenspeichers kann unterschiedlich gewählt werden. So kann beispielsweise die Hubeinrichtung 35 auf dem Rohr 2 oberhalb der Rotationseinheit 17 angeordnet werden und die Rotationseinheit 17 oberhalb der Speicherscheiben 28. Der Gesamte Zwischenspeicher kann auf einem Boden Rollen angeordnet werden, so dass die gesamte Anordnung leicht an einen anderen Ort bewegt werden kann.

## Patentansprüche

1. Zwischenspeicher für Stückgut mit einem Speicherturm mit mehreren senkrecht übereinander, zueinander beabstandet angeordneten kreisförmigen oder polygonförmigen waagrechten Speicherscheiben (28), die an einem mittigen Rohr (2) angeordnet sind,
wobei die Speicherscheiben (28) fest miteinander verbunden und vertikal verschiebbar an dem Rohr (2) befestigt sind, **dadurch gekennzeichnet, dass** in einem Nutenbereich längs des Rohres (2) eine Nut (29) ausgebildet ist, derart, dass die Wand des Rohres (2) auf zwei Rohrseiten in dem Nutenbereich vertikale Schlitze aufweist,
dass ein zu der Form der Nut korrespondierender Lagerzapfen (12) derart waagrecht in das Rohr (2) eingebracht ist, dass jeweils ein Ende des Lagerzapfens (12) waagrecht durch einen der Schlitze aus dem Rohr (2) herausragt,
dass in dem Rohr (2) eine Hubeinheit angeordnet ist, die mit dem Lagerzapfen (12) derart verbunden ist, dass der Lagerzapfen (12) innerhalb des Nutenbereichs des Rohres (2) durch Antrieb der Hubeinheit über eine Hubantriebseinrichtung vertikal bewegbar ist,
und dass die Enden des Lagerzapfens (12) derart mit den Speicherscheiben (28) verbunden sind, dass die Speicherscheiben (28) mit dem Lagerzapfen (12) vertikal auf und ab bewegbar sind.

2. Zwischenspeicher nach Anspruch 1, **dadurch gekennzeichnet, dass** eine Zapfen-Hublagerung (13) vorgesehen ist, die den Lagerzapfen (12) in den Schlitzen der Nut (29) ringartig umgibt.

3. Zwischenspeicher nach Anspruch 1 oder 2, **dadurch gekennzeichnet, dass** auf der Außenwand des Rohres (2) eine Hublagerung vorgesehen ist, die zur vertikalen Führung der Speicherscheiben (28) angeordnet ist.

4. Zwischenspeicher nach einem der vorangehenden Ansprüche, **dadurch gekennzeichnet, dass** die Hubeinheit eine Spindel (3) aufweist, die auf dem Boden des Zwischenspeichers gelagert ist, sowie eine auf der Spindel (3) mittels korrespondierender Gewinde angeordnete Mutter (19), wobei die Mutter (19) fest mit dem Lagerzapfen (12) verbunden ist,
und dass die Hubantriebseinrichtung einen Hub-Motor (5)und ein Hub-Getriebe umfasst, die außerhalb des Rohres (2) angeordnet und mit der Spindel (3) derart verbunden sind, dass die Spindel (3) in Rotation versetzbar ist.

5. Zwischenspeicher nach einem der vorangehenden Ansprüche, **dadurch gekennzeichnet, dass** auf den aus dem Rohr (2) herausragenden Enden des Lagerzapfens (12) eine Rotationseinheit (17) angeordnet ist, über welche die Speicherscheiben (28) horizontal drehbar mit dem Lagerzapfen (12) verbunden sind, wobei die Rotationseinheit (17) ein Rotationsgetriebe umfasst, über welches sie zum Rotationsantrieb mit einem Rotations-Motor (6) verbunden ist.

6. Zwischenspeicher nach Anspruch 5, **dadurch gekennzeichnet, dass** die Rotationseinheit (17) eine Rotationstrageplatte (32) aufweist, welche fest mit den Speicherscheiben (28) verbunden ist, sowie eine Hubtrageplatte (30), welche fest mit dem Lagerzapfen und drehbar mit der Rotationstrageplatte (32) und den Speicherscheiben (28) verbunden ist.

7. Zwischenspeicher nach Anspruch 6, **dadurch gekennzeichnet, dass** der Rotationsmotor (6) über eine Motortrageplatte (31) fest mit der Hubtrageplatte (30) verbunden ist, wobei das motorseitige Antriebselement mit dem Rotationsgetriebe zum Antrieb der Rotationsplatte (32) geeignet verbunden ist.

8. Zwischenspeicher nach einem der Anspruch 5 bis 7, **dadurch gekennzeichnet, dass** auf der Außenwand des Rohres (2) in dem Nutenbereich eine Rotationslagerung zur Lagerung einer Rotationsbewegung der Speicherscheiben (28) um das Rohr (2) angeordnet ist.

9. Zwischenspeicher nach Anspruch 8, **dadurch gekennzeichnet, dass** die Rotationslagerung (4.1, 4.2) zwei ringförmige Rotations-Lagerelemente aufweist, von denen eines in einem Bereich am oberen Ende des Nutenbereichs und eines in einem Bereich am unteren Ende des Nutenbereichs des Rohres (2) auf der Außenwand des Rohres (2) angeordnet ist.

10. Zwischenspeicher nach einem der Ansprüche 5 bis 9, **dadurch gekennzeichnet, dass** der Rotations-Motor (6) und der Hub-Motor (5) oberhalb des die Speicherscheiben (28) umfassenden Speicherturms und innerhalb eines durch den Durchmesser der Speicherscheiben (28) gegebenen Bereiches angeordnet sind.

11. Zwischenspeicher nach einem der vorangehenden Ansprüche, **dadurch gekennzeichnet, dass** die Speicherscheiben (28) jeweils eine Zentralscheibe (10) umfassen, die an dem Rohr (2) drehbar und vertikal verschiebbar angeordnet ist, und Wechselscheiben (9), die als kreisringartige Segmente ausgebildet und jeweils an der Zentralscheibe (10) befestigbar sind.

12. Zwischenspeicher nach einem der vorangehenden Ansprüche, **dadurch gekennzeichnet, dass** der Zwischenspeicher von einer Umkleidung (14) umgeben ist, die in einem oberen Bereich eine Beschickungsöffnung (15) aufweist,
- die so angeordnet ist, dass durch vertikales Verschieben des Speicherturms in seiner Höhe mittels der Hubeinheit, jede Speicherscheibe (28) an den unteren Rand der Beschickungsöffnung (15) fahrbar ist,
- deren Höhe vorzugsweise *etwa* dem Abstand zweier benachbarter Speicherscheiben (28) voneinander entspricht, und
- an der ein Förderband (7) zum Befördern des Stückguts auf eine der Speicherscheiben (28) angeschlossen ist.

13. Zwischenspeicher nach Anspruch 12, **dadurch gekennzeichnet, dass** an der Beschickungsöffnung (15) eine Verstelleinheit (27) vorgesehen ist, mit der das Förderband (7) höhenverstellbar ist.

14. Zwischenspeicher nach Anspruch 12 oder 13, **dadurch gekennzeichnet, dass** entlang des äußeren Randes der Speicherscheiben (28) Behälter (18) zur Aufnahme des Stückguts angeordnet sind und dass das Förderband (7) eine Beladeeinheit (8) zum Beladen der Behälter (18) mit dem Stückgut aufweist.

15. Zwischenspeicher nach Anspruch 14, **dadurch gekennzeichnet, dass** die Beladeeinheit (8) als eine über den äußeren Rand einer der Speicherscheiben (28) überstehende Messerkante (24) ausgebildet ist.

## Claims

1. Intermediate storage means for general cargo, comprising a storage tower having a plurality of circular or polygonal, horizontal storage discs (28) which are arranged vertically one above the other and so as to be mutually spaced on a central tube (2), the storage discs (28) being rigidly interconnected and being fastened to the tube (2) so as to be vertically moveable, **characterised in that** a groove (29) is formed in a groove region along the tube (2) such that the wall of the tube (2) comprises vertical slits on two tube sides in the groove region, **in that** a bearing journal (12) corresponding to the shape of the groove is introduced horizontally into the tube (2) such that each end of the bearing journal (12) protrudes horizontally out of the tube (2) through one of the slits,-in that a lifting-unit is arranged in the tube (2) and connected to the bearing journal (12) such that the bearing journal (12) can be moved vertically within the groove region of the tube (2) by driving the lifting unit by means of a lift drive means, and **in that** the ends of the bearing journal (12) are connected to the storage discs (28) such that the storage discs (28) can move vertically up and down with the bearing journal (12).

2. Intermediate storage means according to claim 1, **characterised in that** a journal lift support (13) is provided which annularly surrounds the bearing journal (12) in the slits of the groove (29).

3. Intermediate storage means according to either claim 1 or claim 2, **characterised in that** a lift support is provided on the exterior wall of the tube (2) and is arranged for vertically guiding the storage discs (28).

4. Intermediate storage means according to any of the preceding claims, **characterised in that** the lifting unit comprises a spindle (3) which is mounted on the floor of the intermediate storage means, and a nut (19) arranged on the spindle (3) by means of a corresponding thread, the nut (19) being rigidly connected to the bearing journal (12), and **in that** the lift drive means comprises a lift motor (5) and a lift gear which are arranged outside of the tube (2) and are connected to the spindle (3) such that the spindle (3) can be put into rotation.

5. Intermediate storage means according to any of the preceding claims, **characterised in that** a rotation unit (17) is arranged on the ends of the bearing journal (12) which protrude out of the tube (2), by means of which unit the storage discs (28) are connected to the bearing journal (12) so as to be horizontally rotatable, the rotation unit (17) comprising a rotation gear by means of which said unit is connected to a rotation motor (6) for rotational drive.

6. Intermediate storage means according to claim 5, **characterised in that** the rotation unit (17) comprises a rotation support plate (32) which is rigidly connected to the storage discs (28), and a lift support plate (30) which is rigidly connected to the bearing journal and rotatably connected to the rotation support plate (32) and the storage discs (28).

7. Intermediate storage means according to claim 6, **characterised in that** the rotation motor (6) is rigidly connected to the lift support plate (30) by means of a motor support plate (31), the motor-side drive element being suitably connected to the rotation gear in order to drive the rotation plate (32).

8. Intermediate storage means according to any of claims 5 to-7, **characterised in that** a rotation support for supporting a rotational movement of the storage discs (28) around the tube (2) is arranged on the exterior wall of the tube (2) in the groove region.

9. Intermediate storage means according to claim 8, **characterised in that** the rotation support (4.1, 4.2) comprises two annular rotation support elements, of which one is arranged in a region at the upper end of the groove region and one in a region at the lower end of the groove region of the tube (2) on the exterior wall of the tube (2).

10. Intermediate storage means according to any of claims 5 to 9, **characterised in that** the rotation motor (6) and the lift motor (5) are arranged above the storage tower comprising the storage discs (28) and inside of a region given by the diameter of the storage discs (28).

11. Intermediate storage means according to any of the preceding claims, **characterised in that** the storage discs (28) each comprise a central disc (10) which is arranged so as to be rotatably and vertically moveable on the tube (2), and replaceable discs (9) which are designed as annular segments and can each be fastened to the central disc (10).

12. Intermediate storage means according to any of the preceding claims, **characterised in that** the intermediate storage means is surrounded by a casing (14) which, in an upper region, comprises a loading opening (15),
- which is arranged such that each storage disc (28) can be moved to the lower edge of the loading opening (15) by vertically moving the storage tower with respect to its height by means of the lifting unit,
- the height of which preferably *approximately* corresponds to the distance between two adjacent storage discs (28), and
- to which a conveyor belt (7) is attached for transporting the general cargo to one of the storage discs (28).

13. Intermediate storage means according to claim 12, **characterised in that** an adjusting unit (27) is provided on the loading opening (15), by means of which the height of the conveyor belt (7) can be adjusted.

14. Intermediate storage means according to either claim 12 or claim 13, **characterised in that** containers (18) for receiving the general cargo are arranged along the outer edge of the storage discs (28) and **in that** the conveyor belt (7) comprises a loading unit (8) for loading the containers (18) with the general cargo.

15. Intermediate storage means according to-claim 14, **characterised in that** the loading-unit (8) is designed as a knife edge (24) projecting over the outer edge of one of the storage discs (28).

## Revendications

1. Dispositif de stockage intermédiaire pour produits au détail, comportant une tour de stockage avec plusieurs disques de stockage (28) horizontaux, circulaires ou polygonaux, disposés verticalement les uns au-dessus des autres en étant espacés les uns des autres, et disposés sur un tube central (2), dans lequel
les disques de stockage (28) sont reliés de manière fixe les uns aux autres et fixés de manière coulissante verticalement sur le tube (2), **caractérisé en ce qu'**une rainure (29) est formée dans une zone de rainure le long du tube (2) de telle sorte que la paroi du tube (2) présente des fentes verticales sur deux côtés du tube dans la zone de rainure,
qu'un tourillon (12) correspondant à la forme de la rainure est introduit horizontalement dans le tube (2) de telle sorte que chaque extrémité du tourillon (12) dépasse du tube (2) par une des fentes,
qu'une unité de levage est disposée dans le tube (2), laquelle est reliée au tourillon (12) de telle sorte que le tourillon (12) peut être déplacé verticalement à l'intérieur de la zone de rainure du tube (2) par entraînement de l'unité de levage par un moyen d'entraînement de levage et
que les extrémités du tourillon (12) sont reliées aux disques de stockage (28) de telle sorte que les disques de stockage (28) peuvent être déplacés verticalement vers le haut ou le bas avec le tourillon (12).

2. Dispositif de stockage intermédiaire selon la revendication 1, **caractérisé en ce qu'**un palier de levage de tourillon (13), qui entoure le tourillon (12) en forme d'anneau dans les fentes de la rainure (29), est prévu.

3. Dispositif de stockage intermédiaire selon la revendication 1 ou 2, **caractérisé en ce qu'**un palier de levage est prévu sur la paroi extérieure du tube (2), lequel est disposé pour guider verticalement les disques de stockage (28).

4. Dispositif de stockage intermédiaire selon l'une des revendications précédentes, **caractérisé en ce que** l'unité de levage présente une broche (3) montée sur le fond du dispositif de stockage intermédiaire et un écrou (19) disposé sur la broche (3) au moyen de filetages correspondants, l'écrou (19) étant relié de manière fixe au tourillon (12), et que le moyen d'entraînement de levage comprend un moteur de levage (5) et un mécanisme de levage qui sont disposés à l'extérieur du tube (2) et reliés à la broche (3) de telle sorte que la broche (3) peut être mise en rotation.

5. Dispositif de stockage intermédiaire selon l'une des revendications précédentes, **caractérisé en ce qu'**une unité de rotation (17) est disposée sur les extrémités du tourillon (12) dépassant du tube (2), par l'intermédiaire de laquelle les disques de stockage (28) sont reliés en rotation horizontale au tourillon (12), l'unité de rotation (17) comprenant un mécanisme de rotation par lequel elle est reliée à un moteur de rotation (6) pour l'entraînement en rotation.

6. Dispositif de stockage intermédiaire selon la revendication 5, **caractérisé en ce que** l'unité de rotation (17) présente une plaque support de rotation (32) reliée de manière fixe aux disques de stockage (28) ainsi qu'une plaque support de levage (30) reliée de manière fixe au tourillon et reliée en rotation à la plaque support de rotation (32) et aux disques de stockage (28).

7. Dispositif de stockage intermédiaire selon la revendication 6, **caractérisé en ce que** le moteur de rotation (6) est relié de manière fixe à la plaque support de levage (30) par l'intermédiaire d'une plaque support de moteur (31), l'élément d'entraînement côté moteur étant relié au mécanisme de rotation d'une manière appropriée pour entraîner la plaque de rotation (32).

8. Dispositif de stockage intermédiaire selon l'une des revendications 5 à 7, **caractérisé en ce qu'**un palier de rotation pour supporter un mouvement de rotation des disques de stockage (28) autour du tube (2) est disposé sur la paroi extérieure du tube (2) dans la zone de rainure.

9. Dispositif de stockage intermédiaire selon la revendication 8, **caractérisé en ce que** le palier de rotation (4.1, 4.2) présente deux éléments de palier de rotation annulaires, dont l'un est disposé dans une zone située à l'extrémité supérieure de la zone de rainure et l'autre dans une zone située à l'extrémité inférieure de la zone de rainure du tube (2) sur la paroi extérieure du tube (2).

10. Dispositif de stockage intermédiaire selon l'une des revendications 5 à 9, **caractérisé en ce que** le moteur de rotation (6) et le moteur de levage (5) sont disposés au-dessus de la tour de stockage comprenant les disques de stockage (28) et à l'intérieur d'une zone donnée par le diamètre des disques de stockage (28).

11. Dispositif de stockage intermédiaire selon l'une des revendications précédentes, **caractérisé en ce que** les disques de stockage (28) comprennent chacun un disque central (10) qui est disposé sur le tube (2) de manière rotative et coulissante verticalement, et des disques interchangeables (9) qui sont réalisés sous la forme de segments annulaires et peuvent être fixés chacun au disque central (10).

12. Dispositif de stockage intermédiaire selon l'une des revendications précédentes, **caractérisé en ce que** le dispositif de stockage intermédiaire est entouré d'une enveloppe (14) qui présente une ouverture de chargement (15) dans une zone supérieure,
- qui est disposée de telle sorte que, par déplacement vertical de la tour de stockage dans sa hauteur au moyen de l'unité de levage, chaque disque de stockage (28) peut être déplacé vers le bord inférieur de l'ouverture de chargement (15),
- dont la hauteur correspond de préférence approximativement à la distance entre deux disques de stockage adjacents (28) et
- à laquelle est raccordée une bande transporteuse (7) pour transporter les produits au détail sur l'un des disques de stockage (28).

13. Dispositif de stockage intermédiaire selon la revendication 12, **caractérisé en ce qu'**une unité de réglage (27) est prévue au niveau de l'ouverture de chargement (15), au moyen de laquelle la bande transporteuse (7) peut être réglée en hauteur.

14. Dispositif de stockage intermédiaire selon la revendication 12 ou 13, **caractérisé en ce que** des contenants (18) sont disposés le long du bord extérieur des disques de stockage (28) pour recevoir les produits au détail et que la bande transporteuse (7) présente une unité de chargement (8) pour charger les contenants (18) avec les produits au détail.

15. Dispositif de stockage intermédiaire selon la revendication 14, **caractérisé en ce que** l'unité de chargement (8) est réalisée sous la forme d'une arête de coupe (24) dépassant du bord extérieur de l'un des disques de stockage (28).
